# EUROPEAN PATENT SPECIFICATION

(11) **EP 3 590 807 B1**
(45) Date of publication and mention of the grant of the patent: **01.09.2021**
(21) Application number: 19183654.3
(22) Date of filing: 01.07.2019
(51) Int. Cl.: B62J 25/06

(54) **STRADDLED VEHICLE**
GRÄTSCHSITZFAHRZEUG
VÉHICULE À ENFOURCHER

(30) Priority: 02.07.2018 JP 2018126062
(43) Date of publication of application: 08.01.2020
(73) Proprietor: YAMAHA HATSUDOKI KABUSHIKI KAISHA, Iwata-shi, Shizuoka 438-8501 (JP)
(72) Inventor: TAKARA, Koji, Iawata-shi, Shizuoka 438-8501 (JP); UMETANI, Toshiaki, Iwata-shi, Shizuoka 438-8501 (JP); ADACHI, Takashi, Iwata-shi, Shizuoka 438-8501 (JP)
(74) Representative: Grünecker Patent- und Rechtsanwälte PartG mbB

(56) References cited:
- EP-A1- 2 017 171
- EP-A1- 2 090 503
- BE-A- 363 675
- US-A1- 2009 285 628
- US-A1- 2016 083 035
- US-B1- 7 404 568

## Description

The present invention relates to a straddled vehicle according to the preamble of independent claim 1 that is ridden by a rider and a tandem rider one behind another. Such a straddled vehicle can be taken from the prior art document EP 2 090 503 A1.

Conventional straddled vehicles have been known in the art that are configured so that a rider and a tandem rider sit one behind another. For example, Japanese Patent No. 4452129 and Japanese Laid-Open Patent Publication No. 2016-88331 disclose a motorcycle including a main seat on which a rider sits, a tandem seat on which a tandem rider sits, a foot board on which the rider rests his/her feet, and tandem footrests on which the tandem rider rests his/her feet. Note that the main seat and the tandem seat are formed integral with each other.

The motorcycle includes left and right frames that extend in the vehicle front-rear direction. A bracket extending rearward is fixed to each frame. The tandem footrest is bar-shaped and is supported by the bracket.

Since the foot board has a large area, the rider can easily change the position of the feet on the foot board. Therefore, the rider, who sits on the main seat, can adjust the position of the feet depending on the body size. For example, a big rider with long legs can ride in an easy body position by placing the feet on a relatively forward portion of the foot board. On the other hand, the tandem footrests on which the tandem rider places his/her feet are bar-shaped. A tandem footrest has a small area. Therefore, it is difficult for the tandem rider, who sits on the tandem seat, to adjust the position of the feet on the tandem footrests.

While the rider, who drives a straddled vehicle, is an adult, the tandem rider, who does not drive, is not necessarily an adult. The tandem rider may be a child of a small body size or an adult of a large body size. The body size difference among tandem riders is greater than the body size difference among riders. Therefore, it would be desirable if the position of the tandem footrests can be adjusted depending on the body size of the tandem rider.

With the motorcycle disclosed in Japanese Patent No. 4452129 and Japanese Laid-Open Patent Publication No. 2016-88331, one may consider extending the bracket rearward, and providing a plurality of attachment portions, to and from which the tandem footrest can be attached and detached, in the rear portion of the bracket. Then, by changing the attachment portion to which the tandem footrest is attached, it is possible to change the position of the tandem footrest. However, this will enlarge the bracket toward the rear side. Simply extending the bracket rearward will result in a low rigidity in the base portion of the bracket. In order to increase the rigidity, there is a need to for example increase the thickness of the bracket, thereby increasing the weight of the bracket.

It is an object of the present invention to provide a straddled vehicle including tandem footrests that support the feet of the tandem rider, wherein the positions of the tandem footrests can be easily changed while suppressing an increase in the size and weight of the brackets that support the tandem footrests. According to the present invention said object is solved by a straddled vehicle having the features of independent claim 1. Preferred embodiments are laid down in the dependent claims.

A straddled vehicle disclosed herein includes among other features:
a head pipe; a seat frame placed outward of the head pipe in a vehicle width direction and extending rearward; a foot board placed rearward and downward of the head pipe; a main seat placed rearward of the head pipe and upward of the foot board; a tandem seat placed rearward of the main seat; a bracket detachably attached to the seat frame; and a tandem footrest that is supported by the bracket and placed rearward of a front end of the main seat and forward of a rear end of the tandem seat. At least first and second holes are formed in one of the bracket and the seat frame, and at least third, fourth and fifth holes are formed in the other one of the bracket and the seat frame. The straddled vehicle includes a first bolt inserted through the first hole and the third hole and a second bolt inserted through the second hole and the fourth hole, or a first bolt inserted through the first hole and the fourth hole and a second bolt inserted through the second hole and the fifth hole.

With the straddled vehicle described above, the tandem footrest can be placed in the first position by inserting the first bolt through the first and third holes and inserting the second bolt through the second and fourth holes, and fixing the bracket to the seat frame by the first and second bolts. On the other hand, the tandem footrest can be placed in the second position by inserting the first bolt through the first and fourth holes and the second bolt through the second and fifth holes, and fixing the bracket to the seat frame by the first and second bolts. Thus, the position of the tandem footrest can be easily changed only by changing the bracket relative to the seat frame and changing the combination of holes through which the first and second bolts are inserted. With the straddled vehicle described above, there is no need to extend the bracket rearward in order to provide a plurality of attachment portions to which the tandem footrest is attached. Therefore, it is possible to suppress an increase in the size and weight of the bracket. With the straddled vehicle described above, the position of the tandem footrest can be easily changed while suppressing an increase in the size and weight of the bracket that supports the tandem footrest.

According to a preferred embodiment, the straddled vehicle includes a side cover placed outward of the seat frame in the vehicle width direction. The bracket is placed between the seat frame and the side cover.

According to the embodiment described above, it is possible to avoid interference between the bracket and the side cover.

According to a preferred embodiment, a gap is formed between the bracket and the side cover as the bracket is seen from a rear side in a vehicle front-rear direction.

According to the embodiment described above, when changing the position of the tandem footrest, the operator can insert a tool into the gap from the rear side of the side cover. Then, it is possible with the tool to attach and detach the first and second bolts. The bracket can be easily attached to and detached from the seat frame, and it is therefore easy to perform the operation of changing the position of the tandem footrest. The bracket can be attached and detached without removing the side cover. Also in view of this, it is easy to perform the operation of changing the position of the tandem footrest.

According to a preferred embodiment, sixth and seventh holes are formed in the bracket, and an eighth hole is formed in the side cover. The straddled vehicle includes a third bolt that is inserted through the sixth hole and the eighth hole when the first bolt is inserted through the first hole and the third hole and the second bolt is inserted through the second hole and the fourth hole, or a third bolt that is inserted through the seventh hole and the eighth hole when the first bolt is inserted through the first hole and the fourth hole and the second bolt is inserted through the second hole and the fifth hole.

According to the embodiment described above, the side cover can be fixed to the bracket by the third bolt. Therefore, it is possible to increase the robustness of the side cover. Thus, it is possible to prevent the side cover from being dented when the feet of the rider or the tandem rider hit the side cover. The bracket, which supports the tandem footrest, can be used also as a member for fixing the side cover. Thus, it is possible to reduce the number of components.

According to a preferred embodiment, the side cover and the foot board are provided as a single member formed integrally together.

According to the embodiment described above, it is possible to further increase the robustness of the side cover.

According to a preferred embodiment, the side cover and the first and second bolts overlap with each other as the vehicle is seen from the side.

According to the embodiment described above, the first and second bolts can be hidden by the side cover.

According to a preferred embodiment, the tandem footrest is placed rearward of the foot board.

According to the embodiment described above, since the tandem footrests are placed relatively rearward, the tandem rider sitting on the tandem seat can take an easy body position by placing his/her feet on the tandem footrests.

According to the claimed embodiment, the first and second holes are formed in the bracket; and the third, fourth and fifth holes are formed in the seat frame.

According to the embodiment described above, it is possible to reduce the number of holes in the bracket. There is no need to increase the size of the bracket in order to form many holes. Thus, it is possible to reduce the size of the bracket.

According to the claimed embodiment, the fourth hole is located upward of the third hole; and the fifth hole is located upward of the fourth hole.

According to the embodiment described above, the vertical position of the tandem footrest can be changed by changing the position of the bracket relative to the seat frame.

According to a preferred embodiment, the seat frame includes a pipe portion formed in a pipe shape, and a frame bracket fixed to the pipe portion and having a first flat surface. The bracket has a second flat surface that faces the first flat surface. An axial line of the pipe portion is inclined from a vehicle front-rear direction. The first flat surface is formed non-parallel to an axial line of the pipe portion.

According to the embodiment described above, the position of the bracket is changed along the first flat surface. Since the first flat surface is not parallel to the axial line of the pipe portion, the relationship between the position of the bracket before it is changed and the position of the bracket after it is changed is not dependent on the direction of the axial line of the pipe portion. Therefore, it is possible to relatively freely set the position of the tandem footrest before and after it is changed.

According to a preferred embodiment, the first flat surface is parallel to the vehicle front-rear direction.

According to the embodiment described above, the position of the tandem footrest in the left-right direction does not change even if the position of the bracket is changed. Therefore, it is possible to change the front-rear position or the vertical position of the tandem footrest without changing the position of the tandem footrest in the left-right direction.

According to a preferred embodiment, the straddled vehicle includes an under frame that is placed downward of the foot board and extends rearward. The seat frame includes a first portion that extends rearward and upward from the under frame as the vehicle is seen from the side, and a second portion that extends rearward and upward from the first portion as the vehicle is seen from the side. As the vehicle is seen from the side, an angle formed between the first portion and a horizontal line is greater than an angle formed between the second portion and the horizontal line. The bracket is attached to the first portion.

According to the embodiment described above, the bracket is attached to the first portion of the seat frame that has a large inclination angle relative to the horizontal line. Therefore, it is possible to increase the amount of change in the vertical position of the tandem footrest when the attachment position of the bracket is changed.

According to a preferred embodiment, the straddled vehicle includes a support shaft that is supported by the bracket and pivotally supporting the tandem footrest.

According to the embodiment described above, the tandem footrest can pivot relative to the bracket. When the tandem footrest is not used, the tandem footrest can be folded inward in the vehicle width direction. On the other hand, when the tandem footrest is used, the tandem footrest can be unfolded outward in the vehicle width direction.

Note that while there is no particular limitation on the shape of the tandem footrest, the tandem footrest may be bar-shaped, for example.

According to the teachings set forth above, it is possible to provide a straddled vehicle including tandem footrests that support the feet of the tandem rider, wherein the positions of the tandem footrests can be easily changed while suppressing an increase in the size and weight of the brackets that support the tandem footrests.

### BRIEF DESCRIPTION OF THE DRAWINGS

FIG. 1 is a left side view of a scooter according to an embodiment.
FIG. 2 is a plan view of the scooter.
FIG. 3 is a left side view of a vehicle frame.
FIG. 4 is a plan view of the vehicle frame.
FIG. 5 is a perspective view of a foot board, a tandem footrest and a side cover.
FIG. 6 is an exploded perspective view of a bracket, the tandem footrest and a seat frame as placed in the first position.
FIG. 7 is a plan view of a portion of the seat frame, the bracket and the tandem footrest.
FIG. 8 is an exploded perspective view of the bracket and the seat frame as placed in the second position.
FIG. 9 is a side view of the bracket, the tandem footrest and the side cover as placed in the first position.
FIG. 10 is a side view of the bracket, the tandem footrest and the side cover as placed in the second position.
FIG. 11 is a partial back view on arrow XI of FIG. 2 showing the seat frame, the bracket, the tandem footrest and the side cover.
FIG. 12A is a schematic plan view of the pipe portion, the frame bracket, the bracket and the tandem footrest when the first flat surface of the frame bracket is parallel to the axial line of the pipe portion.
FIG. 12B is a schematic plan view of the pipe portion, the frame bracket, the bracket and the tandem footrest when the first flat surface of the frame bracket is parallel to the vehicle front-rear direction.

### DETAILED DESCRIPTION OF THE PREFERRED EMBODIMENTS

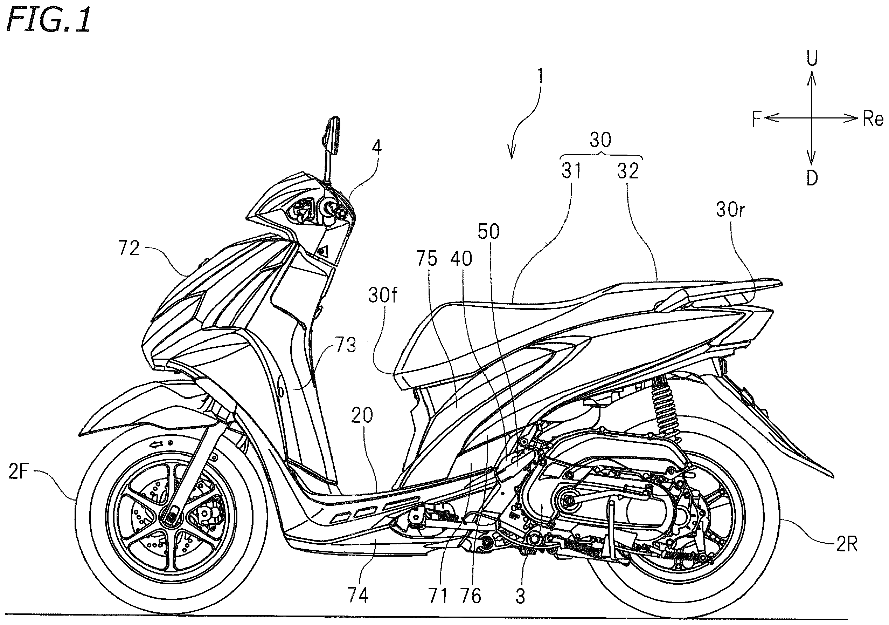

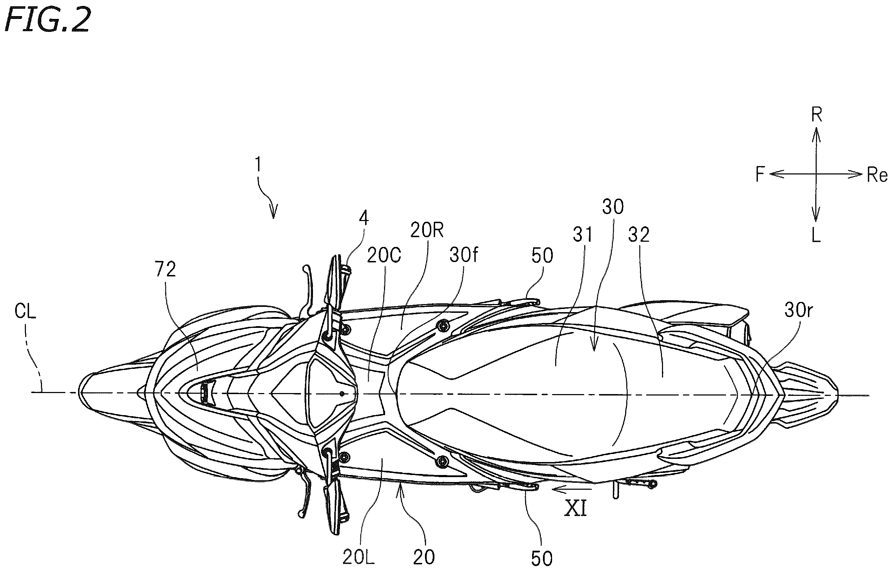

An embodiment will now be described with reference to the drawings. As shown in FIG. 1, a straddled vehicle of the present embodiment is a scooter 1. FIG. 1 is a left side view of the scooter 1. FIG. 2 is a plan view of the scooter 1.

The terms front, rear, left, right, up and down, as used in the description below, refer to these directions as seen from a virtual rider seated on a main seat 31 while the scooter 1 is standing upright on a horizontal surface with no rider, no tandem rider and no load thereon, unless specified otherwise. The designations F, Re, L, R, U and D, as used in the figures, refer to front, rear, left, right, up and down, respectively.

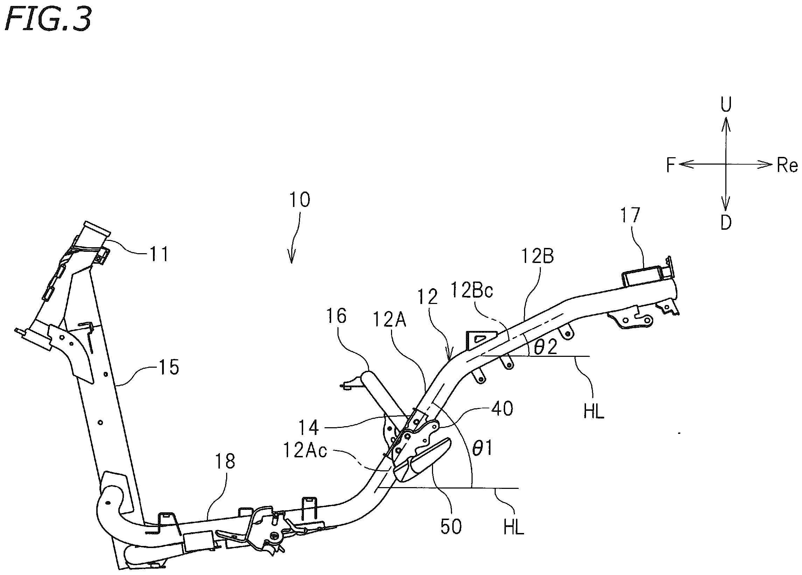

The scooter 1 includes a vehicle frame 10 (see FIG. 3), a front wheel 2F, a rear wheel 2R, an engine unit 3, a steering handle 4, a seat 30, a foot board 20 and a tandem footrest 50.

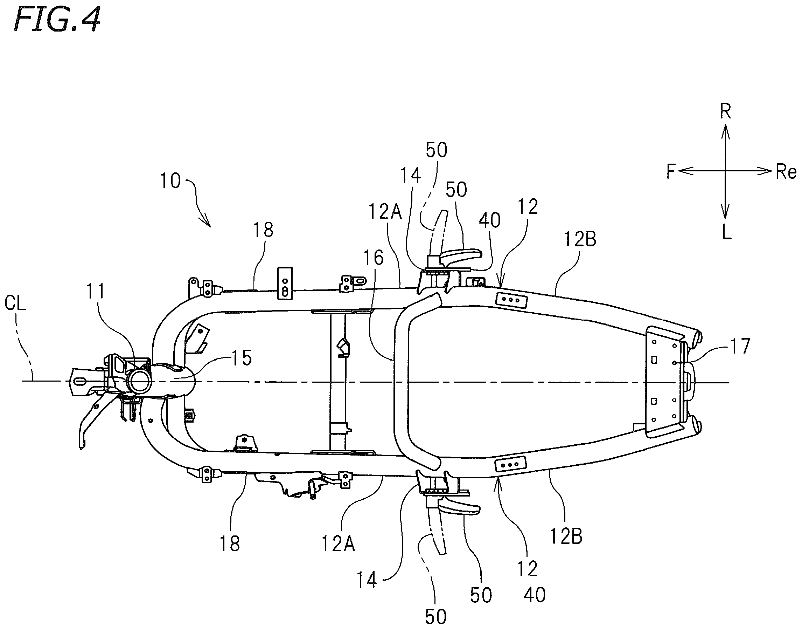

FIG. 3 is a left side view of the vehicle frame 10. FIG. 4 is a plan view of the vehicle frame 10. The vehicle frame 10 includes a head pipe 11, a down frame 15 extending downward from the head pipe 11, left and right under frames 18 extending rearward from the down frame 15, and left and right seat frames 12 extending rearward from the left and right under frames 18, respectively.

In the present specification, for the direction in which members such as frames extend, the term "front/forward" refers not only to the direction that extends in the front direction along the vehicle center line CL (see FIG. 4), as the vehicle is seen from above, but also to directions that are inclined left/right from that direction by an angle that is less than or equal to 45 degrees, unless specified otherwise. Similarly, the term "rear/rearward" refers not only to the direction that extends rearward along the vehicle center line CL, as the vehicle is seen from above, but also to directions that are inclined left/right from that direction by an angle of 45 degrees of less. The term "left/leftward" refers not only to the direction that extends leftward perpendicular to the vehicle center line CL, as the vehicle is seen from above, but also to directions that are inclined frontward/rearward from that direction by an angle of 45 degrees of less. The term "right/rightward" refers not only to the direction that extends rightward perpendicular to the vehicle center line CL, as the vehicle is seen from above, but also to directions that are inclined frontward/rearward from that direction by an angle of 45 degrees of less. The term "up/upward" refers not only to the vertically upward direction, as the vehicle is seen from sideways, but also to directions that are inclined frontward/rearward from that direction by an angle of 45 degrees of less. The term "down/downward" refers not only to the vertically downward direction, as the vehicle is seen from sideways, but also to directions that are inclined frontward/rearward from that direction by an angle of 45 degrees of less.

The under frames 18 are placed below the foot board 20 and extend rearward. As shown in FIG. 3, the seat frame 12 includes a first portion 12A extending rearward and upward from the under frame 18, and a second portion 12B extending rearward and upward from the first portion 12A. As the vehicle is seen from the side, the angle θ1 formed between the axial line 12Ac of the first portion 12A and the horizontal line HL is greater than the angle θ2 formed between the axial line 12Bc of the second portion 12B and the horizontal line HL. Note that while there are two angles between two straight lines, an angle as used herein refers to one of the two angles that is less than or equal to 90 degrees.

In the present embodiment, the axial line 12Ac of the first portion 12A and the axial line 12Bc of the second portion 12B extend straight as the vehicle is seen from the side. However, at least a portion of the axial lines 12Ac and 12Bc may be curved as the vehicle is seen from the side. When at least a portion of the first portion 12A extends in a curved shape as the vehicle is seen from the side, the angle formed between the axial line 12Ac of the first portion 12A and the horizontal line HL is defined as the average value of the angle formed between the axial line 12Ac of the first portion 12A and the horizontal line HL. Similarly, when at least a portion of the second portion 12B extends in a curved shape as the vehicle is seen from the side, the angle formed between the axial line 12Bc of the second portion 12B and the horizontal line HL is defined as the average value of the angle formed between the axial line 12Bc of the second portion 12B and the horizontal line HL.

The first portions 12A of the left and right seat frames 12 are linked together by a cross member 16. The rear end portions of the left and right seat frames 12 are linked together by a cross member 17. As shown in FIG. 4, the cross members 16 and 17 extend in the left-right direction.

The seat 30 is supported by the left and right seat frames 12. As shown in FIG. 1, the seat 30 includes the main seat 31, and a tandem seat 32 placed rearward of the main seat 31. The rider sits on the main seat 31, and the tandem rider sits on the tandem seat 32. The rider refers to a person who drives the scooter 1. The tandem rider refers to a person who does not drive the scooter 1. Herein, the main seat 31 and the tandem seat 32 are formed integral with each other. The seat 30 is a single member. Note however that the main seat 31 and the tandem seat 32 may be formed separately from each other.

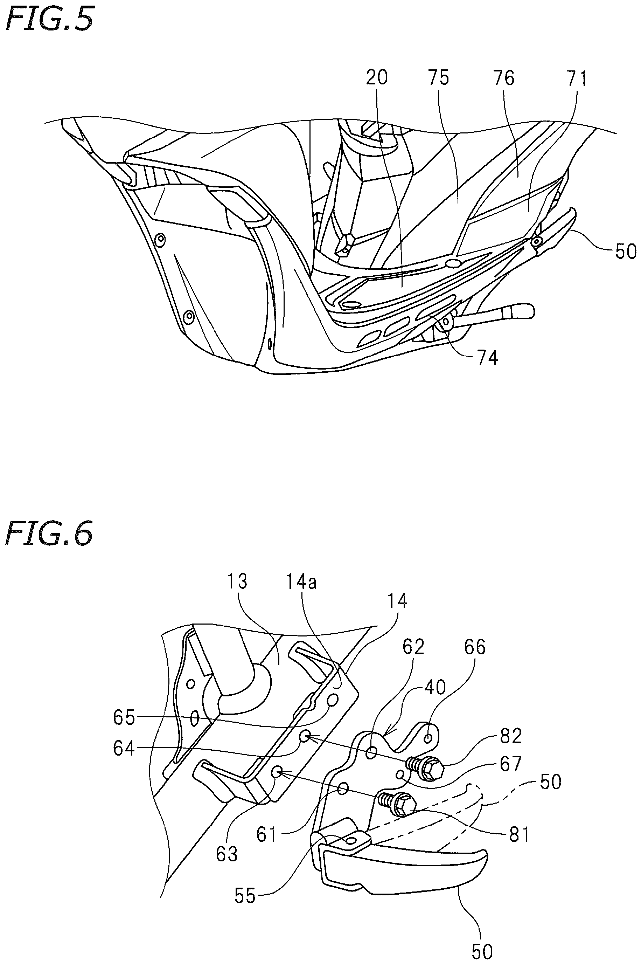

The scooter 1 includes a front cover 72 placed forward of the head pipe 11, a leg shield 73 placed rearward of the down frame 15, an under cover 74 placed downward of the foot board 20, and side covers 71, 75 and 76 placed outward of the seat frame 12 in the vehicle width direction. Note that outward in the vehicle width direction as used in the present specification refers to a direction away from the vehicle center line CL as the vehicle is seen from above. Inward in the vehicle width direction refers to a direction toward the vehicle center line CL as the vehicle is seen from above. The side covers 71, 75 and 76 are placed leftward of the left seat frame 12 and rightward of the right seat frame 12. As shown in FIG. 5, in the present embodiment, the left and right side covers 71 are formed integral with the foot board 20. The left and right side covers 71 and the foot board 20 are formed from a single member. Herein, the side covers 71 and the foot board 20 are formed from a resin-made single member.

The foot board 20 is a member on which the rider rests his/her feet. The foot board 20 is placed rearward and downward of the head pipe 11. The area of the foot board 20 as seen from above is relatively large so that the rider can relatively freely change the position of the feet. As shown in FIG. 2, the foot board 20 includes a left board portion 20L located leftward of the vehicle center line CL, a right board portion 20R located rightward of the vehicle center line CL, and a central board portion 20C located between the left board portion 20L and the right board portion 20R. At least a portion of the central board portion 20C is placed forward of a front end 30f of the seat 30. A portion of the left board portion 20L is located forward of the front end 30f of the seat 30, and another portion thereof is located rearward of the front end 30f of the seat 30. A portion of the right board portion 20R is located forward of the front end 30f of the seat 30, and another portion thereof is located rearward of the front end 30f of the seat 30.

The tandem footrest 50 is a member on which the tandem rider rests a part of his/her foot. The tandem footrest 50 is a member that has a smaller area as seen from above than the foot board 20. A pair of, left and right, tandem footrests 50 are provided. As shown in FIG. 1, the tandem footrest 50 is placed rearward of the front end 30f of the main seat 31, and forward of a rear end 30r of the tandem seat 32. The tandem footrest 50 is placed rearward of the foot board 20. The tandem footrest 50 is bar-shaped. Note that the bar shape as used herein is not limited to straight shapes but includes curved shapes. The bar shape is not limited to those having a circular cross-sectional outline, but may include those having a rectangular cross-sectional outline, for example. There is no limitation on the cross-sectional outline shape. The tandem footrest 50 is configured so that it can pivot relative to the seat frames 12. The tandem footrest 50 can be used by pivoting the tandem footrest 50 so that it extends outward in the vehicle width direction. On the other hand, the tandem footrest 50 can be retracted by pivoting the tandem footrest 50 so that it extends rearward.

As shown in FIG. 6, the tandem footrest 50 is pivotally supported by a bracket 40. The tandem footrest 50 is linked to the bracket 40 by a support shaft 55. The tandem footrest 50 can pivot about the axial line of the support shaft 55 relative to the bracket 40. While there is no particular limitation on the shape of the bracket 40, it is herein formed in a plate shape. The tandem footrest 50 is linked to a lower portion of the bracket 40.

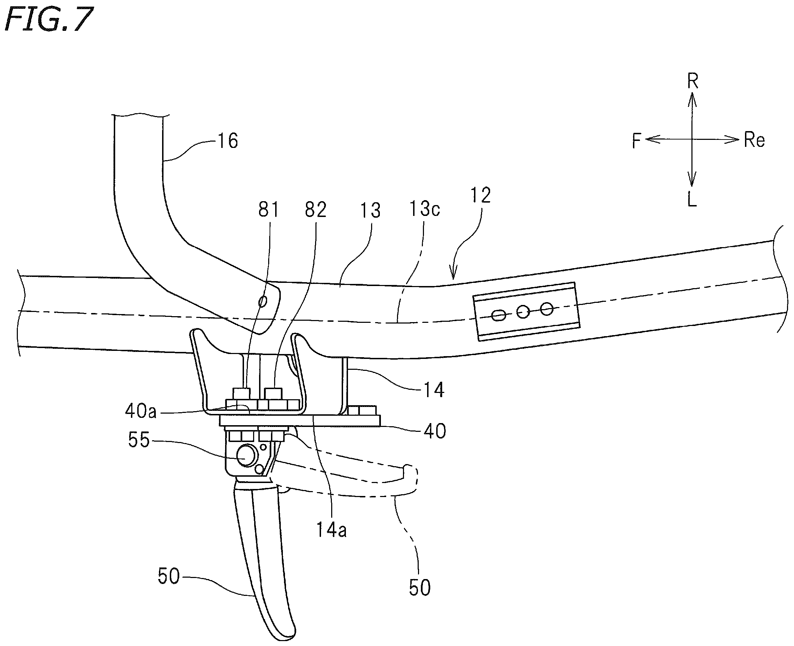

As shown in FIG. 6 and FIG. 7, the first portion 12A of the seat frame 12 includes a pipe portion 13 having a pipe shape, and a frame bracket 14 fixed to the pipe portion 13. The frame bracket 14 is placed outward in the vehicle width direction of the axial line 13c of the pipe portion 13. The frame bracket 14 has a first flat surface 14a that faces outward in the vehicle width direction. The first flat surface 14a is formed non-parallel to the axial line 13c of the pipe portion 13. The first flat surface 14a is formed parallel to the vehicle front-rear direction. In other words, the first flat surface 14a is formed parallel to the vehicle center line CL. The bracket 40 includes a second flat surface 40a that faces inward in the vehicle width direction.

As shown in FIG. 6, the bracket 40 has a first hole 61 and a second hole 62. The frame bracket 14 has a third hole 63, a fourth hole 64 and a fifth hole 65. The fourth hole 64 is located upward and rearward of the third hole 63, and the fifth hole 65 is located upward and rearward of the fourth hole 64. The bracket 40 has a sixth hole 66 and a seventh hole 67.

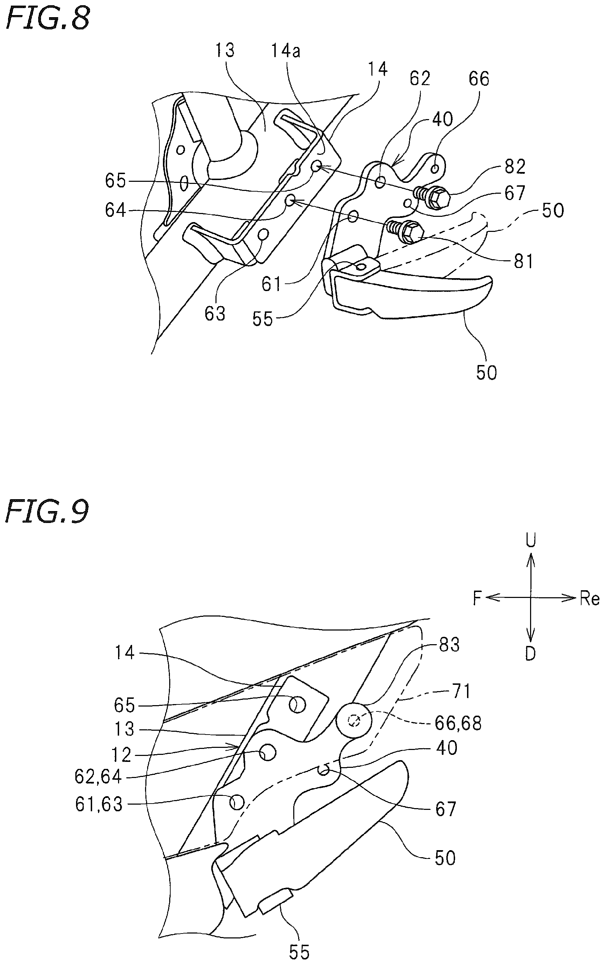

The bracket 40 and the frame bracket 14 are fixed together by a first bolt 81 and a second bolt 82 with the first flat surface 14a and the second flat surface 40a facing each other. The bracket 40 can be attached to and detached from the frame bracket 14. As shown in FIG. 6 and FIG. 8, the position of the bracket 40 relative to the frame bracket 14 can be changed by appropriately selecting holes, from among the first to fifth holes 61 to 65, through which the first bolt 81 and the second bolt 82 are inserted. The position of the tandem footrest 50 can be changed by changing the position of the bracket 40.

As shown in FIG. 6, the bracket 40 is placed in the first position by inserting the first bolt 81 through the first hole 61 and the third hole 63, inserting the second bolt 82 through the second hole 62 and the fourth hole 64, and fixing the first bolt 81 and the second bolt 82 by nuts (not shown). As shown in FIG. 8, the bracket 40 can be placed in the second position, which is upward and rearward of the first position, by inserting the first bolt 81 through the first hole 61 and the fourth hole 64, inserting the second bolt 82 through the second hole 62 and the fifth hole 65, and fixing the first bolt 81 and the second bolt 82 by nuts.

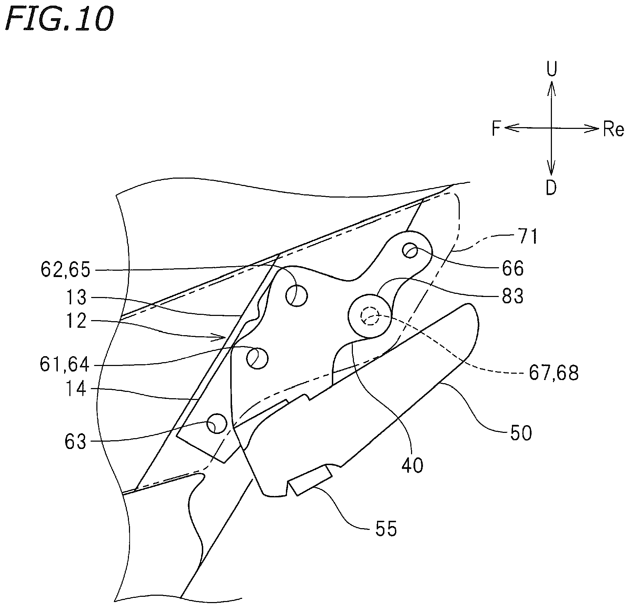

As shown in FIG. 9, the side cover 71 has an eighth hole 68. When the bracket 40 is in the first position, a third bolt 83 is inserted through the sixth hole 66 of the bracket 40 and the eighth hole 68 of the side cover 71. When the third bolt 83 is fixed by a nut (not shown), the side cover 71 and the bracket 40 are fixed together. Since the bracket 40 is fixed to the seat frame 12 by the first bolt 81 and the second bolt 82, the side cover 71 is fixed to the seat frame 12 with the bracket 40 therebetween. As shown in FIG. 10, when the bracket 40 is in the second position, the third bolt 83 is inserted through the seventh hole 67 of the bracket 40 and the eighth hole 68 of the side cover 71. Also in this case, the side cover 71 is fixed to the seat frame 12 with the bracket 40 therebetween.

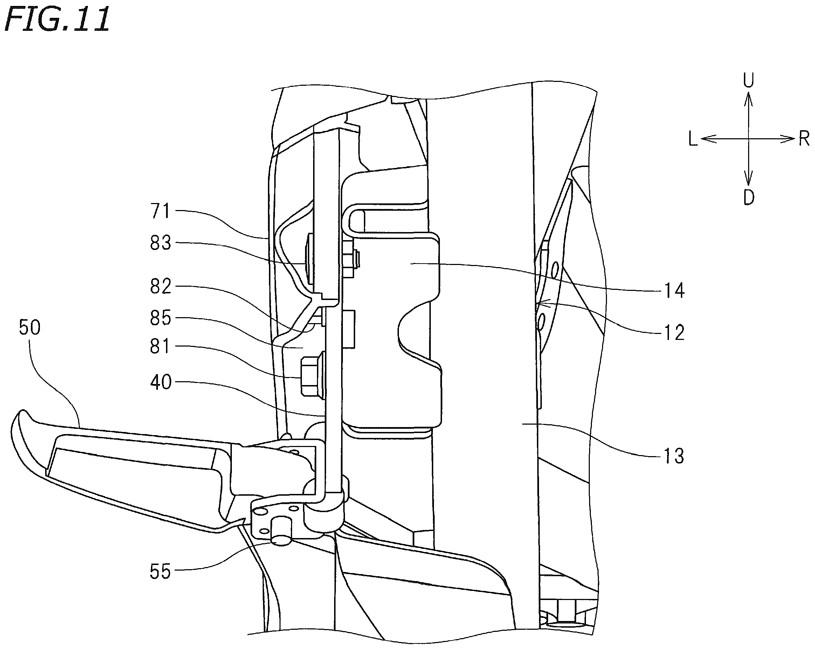

FIG. 11 shows the bracket 40, etc., as seen from the direction of arrow XI of FIG. 2. As shown in FIG. 11, the bracket 40 is placed between the seat frame 12 and the side cover 71. Specifically, the bracket 40 is placed between the frame bracket 14 of the seat frame 12 and the side cover 71. The rear side of the side cover 71 is open. Therefore, the bracket 40 and the frame bracket 14 are visible from the rear side of the side cover 71. As the bracket 40 is seen from the rear side in the vehicle front-rear direction, a gap 85 is provided between the bracket 40 and the side cover 71. Therefore, the operator can easily attach and remove the first to third bolts 81 to 83 by inserting a tool into the gap 85 from the rear side of the side cover 71.

As shown in FIG. 9 and FIG. 10, whether the position of the bracket 40 is the first position or the second position, the side cover 71 and the first bolt 81 overlap with each other and the side cover 71 and the second bolt 82 overlap with each other as the vehicle is seen from the side. The first bolt 81 and the second bolt 82 are hidden by the side cover 71.

As described above, with the scooter 1 according to the present embodiment, the position of the bracket 40 relative to the seat frame 12 can be changed by changing the combination of holes, from among the holes 81 to 85 of the bracket 40 and the frame bracket 14, through which the first bolt 81 and the second bolt 82 are inserted. Thus, it is possible to easily change the position of the tandem footrest 50. For example, when the tandem rider to sit on the tandem seat 32 is a relatively big person, the tandem footrest 50 can be placed at a relatively downward and forward position by placing the bracket 40 in the first position. On the other hand, when the tandem rider to sit on the tandem seat 32 is a relatively small person (e.g., a child), the tandem footrest 50 can be placed at a relatively upward and rearward position by placing the bracket 40 in the second position. Thus, with the scooter 1 according to the present embodiment, it is possible to adjust the position of the tandem footrest 50 depending on the body size of the tandem rider to sit on the tandem seat 32. Therefore, it is possible to improve the ride comfort for the tandem rider.

Now, in order to make it possible to change the position of the tandem footrest 50, one may consider extending the bracket 40 rearward, and providing a plurality of attachment portions, to and from which the tandem footrest 50 can be attached and detached, in the extended portion. However, this will elongate the bracket 40 and enlarge the bracket 40, and lower the rigidity of the base portion of the bracket 40. In order to increase the rigidity, there is a need to for example increase the thickness of the bracket 40, thereby increasing the weight of the bracket 40. However, with the scooter 1 according to the present embodiment, the position on the seat frame 12 at which the bracket 40 is attached is changed, and there is no need to extend the bracket 40 itself rearward. Therefore, it is possible to avoid an increase in the size and weight of the bracket 40.

Therefore, with the scooter 1 according to the present embodiment, the position of the tandem footrest 50 can be easily changed depending on the body size of the tandem rider while suppressing an increase in the size and weight of the bracket 40 supporting the tandem footrest 50.

According to the present embodiment, the bracket 40 is placed between the seat frame 12 and the side cover 71 (see FIG. 11). Therefore, it is possible to avoid interference between the bracket 40 and the side cover 71.

As the bracket 40 is seen from the rear side in the vehicle front-rear direction, the gap 85 is formed between the bracket 40 and the side cover 71. The operator can easily attach and detach the bracket 40 to and from the seat frame 12 by inserting a tool into the gap 85 from the rear side of the side cover 71 and attaching and removing the first bolt 81 and the second bolt 82. Thus, the position of the tandem footrest 50 can be easily changed. The position of the tandem footrest 50 can be changed without removing the side cover 71. In the present embodiment, the position of the tandem footrest 50 can be changed without removing the foot board 20 that is integral with the side cover 71. Also in view of this, the position of the tandem footrest 50 can be easily changed.

As shown in FIG. 9 and FIG. 10, the bracket 40 has the sixth hole 66 and the seventh hole 67, and the side cover 71 has the eighth hole 68. When the bracket 40 is placed in the first position, the third bolt 83 is inserted through the sixth hole 66 and the eighth hole 68, and the side cover 71 is fixed to the bracket 40 by the third bolt 83. On the other hand, when the bracket 40 is placed in the second position, the third bolt 83 is inserted through the seventh hole 67 and the eighth hole 68, and the side cover 71 is fixed to the bracket 40 by the third bolt 83. The side cover 71 is placed so that the feet of the rider sitting on the main seat 31 or the feet of the tandem rider sitting on the tandem seat 32 are likely to be in contact with the side cover 71. However, according to the present embodiment, even if the position of the tandem footrest 50 is changed, the side cover 71 is fixed to the seat frame 12 with the bracket 40 therebetween. Therefore, it is possible to increase the robustness of the side cover 71. Therefore, even if the feet of the rider or the tandem rider hit the side cover 71, the side cover 71 will not be dented. The bracket 40, which supports the tandem footrest 50, can be used also as a member for fixing the side cover 71 to the seat frame 12. Thus, it is possible to reduce the number of components.

While the side cover 71 may be separate from the foot board 20, they are integral together in the present embodiment. The side cover 71 and the foot board 20 are provided as a single member formed integrally together. Thus, it is possible to increase the robustness of the side cover 71.

As shown in FIG. 9 and FIG. 10, the side cover 71 and the first bolt 81 and the second bolt 82 overlap with each other as the vehicle is seen from the side. As shown in FIG. 1, the first bolt 81 and the second bolt 82 are hidden by the side cover 71 and not exposed as the vehicle is seen from the side. According to the present embodiment, the first bolt 81 and the second bolt 82 can be hidden by the side cover 71.

While there is no particular limitation on the position of the tandem footrests 50, the tandem footrests 50 are placed rearward of the foot board 20 in the present embodiment. Since the tandem footrests 50 are placed relatively rearward, the tandem rider sitting on the tandem seat 32 can take an easy body position by placing his/her feet on the tandem footrests 50.

In the present embodiment, the first hole 61 and the second hole 62 are formed in the bracket 40, and the third hole 63, the fourth hole 64 and the fifth hole 65 are formed in the frame bracket 14 of the seat frame 12. However, the first hole 61 and the second hole 62 may be formed in the frame bracket 14, and the third hole 63, the fourth hole 64 and the fifth hole 65 may be formed in the bracket 40. The effects described above can be realized also in such a case. That is, the first hole 61 and the second hole 62 may be formed in one of the bracket 40 and the seat frame 12, and the third hole 63, the fourth hole 64 and the fifth hole 65 may be formed in the other one of the bracket 40 and the seat frame 12.

However, according to the present embodiment, since the first hole 61 and the second hole 62 are formed in the bracket 40, it is possible to reduce the number of holes in the bracket 40 as compared with a case where the third hole 63, the fourth hole 64 and the fifth hole 65 are formed in the bracket 40. Thus, it is possible to reduce the size of the bracket 40.

The fourth hole 64 is located upward of the third hole 63, and the fifth hole 65 is located upward of the fourth hole 64. Therefore, the vertical position of the tandem footrest 50 can be changed by changing the position of the bracket 40 relative to the frame bracket 14. The fourth hole 64 is located rearward of the third hole 63, and the fifth hole 65 is located rearward of the fourth hole 64. Therefore, the front-rear position of the tandem footrest 50 can be changed by changing the position of the bracket 40 relative to the frame bracket 14.

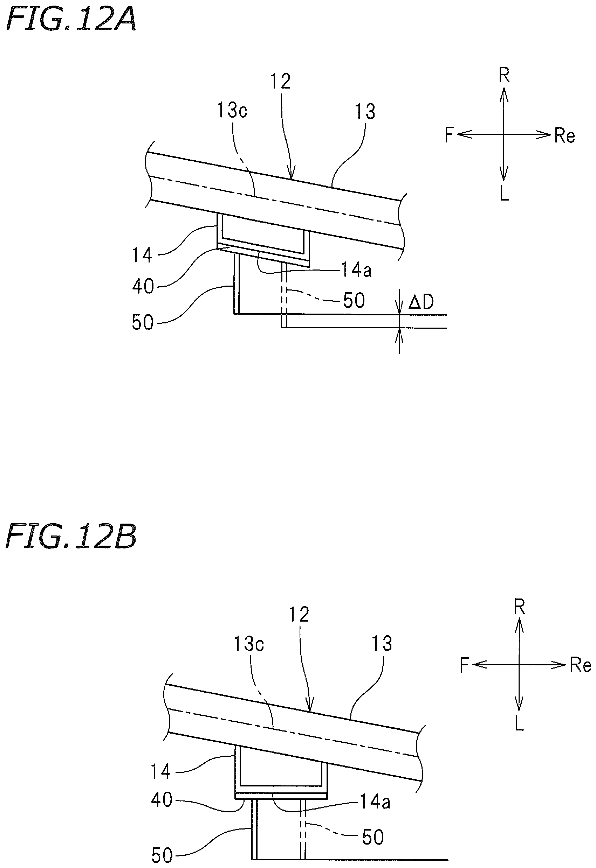

The bracket 40 is fixed to the frame bracket 14 with the first flat surface 14a of the frame bracket 14 and the second flat surface 40a of the bracket 40 facing each other. The position of the bracket 40 is changed along the first flat surface 14a of the frame bracket 14. If the first flat surface 14a were parallel to the axial line 13c of the pipe portion 13, the position of the bracket 40 could only be changed along the axial line 13c of the pipe portion 13. However, in the present embodiment, the first flat surface 14a is non-parallel to the axial line 13c of the pipe portion 13. Therefore, the position of the bracket 40 can be changed without being limited in the direction of the axial line 13c of the pipe portion 13. For example, as shown in FIG. 12A, when the axial line 13c of the pipe portion 13 and the first flat surface 14a are non-parallel to the vehicle front-rear direction as the vehicle is seen from above, the left-right position of the tandem footrest 50 varies by the distance ΔD between when the bracket 40 is placed in the first position and when the bracket 40 is placed in the second position. On the other hand, in the present embodiment, as exaggerated in FIG. 12B, the axial line 13c of the pipe portion 13 is non-parallel to the vehicle front-rear direction but the first flat surface 14a is parallel to the vehicle front-rear direction. Therefore, the position of the tandem footrest 50 in the left-right direction does not change even if the position of the bracket 40 is changed. According to the present embodiment, it is possible to prevent the left-right position from varying when the position of the tandem footrest 50 is changed.

As shown in FIG. 3, the frame bracket 14 is provided on the first portion 12A of the seat frame 12 that has a large inclination angle relative to the horizontal line HL. Therefore, as compared with a case where the frame bracket 14 is provided on the second portion 12B that has a small inclination angle relative to the horizontal line HL, it is possible to increase the amount of change in the vertical position of the tandem footrest 50 when the position of the bracket 40 is changed.

According to the present embodiment, the tandem footrest 50 is pivotally supported by the bracket 40 by the support shaft 55 (see FIG. 6). When not used, the tandem footrest 50 can be folded inward in the vehicle width direction. On the other hand, when used, the tandem footrest 50 can be unfolded outward in the vehicle width direction. The tandem footrest 50 can be retracted and unfolded.

In the present embodiment, the bracket 40 is formed in a plate shape. Therefore, the same component can be used as the bracket 40 attached to the left seat frame 12 and as the bracket 40 attached to the right seat frame 12. The bracket 40 can be attached to the left seat frame 12 by linking the tandem footrest 50 to the left surface of the plate-shaped bracket 40 so that the tandem footrest 50 supported by the bracket 40 can be used as the tandem footrest for the left foot. On the other hand, the bracket 40 can be attached to the right seat frame 12 by linking the tandem footrest 50 to the right surface of the plate-shaped bracket 40 so that the tandem footrest 50 supported by the bracket 40 can be used as the tandem footrest for the right foot. Thus, according to the present embodiment, the bracket 40 of the same specifications can be attached either one of the left seat frame 12 and the right seat frame 12.

While one embodiment has been described above, the embodiment is merely an example, and various other embodiments are possible.

The straddled vehicle refers to a vehicle to be straddled by a passenger. The straddled vehicle is not limited to the scooter 1. The straddled vehicle may be a motorcycle other than a scooter. The straddled vehicle is not limited to a motorcycle. The number of wheels provided on the straddled vehicle is not limited to two.

In the embodiment described above, the main seat 31 and the tandem seat 32 are formed integral with each other. However, the main seat 31 and the tandem seat 32 may be formed separately from each other.

In the embodiment described above, the number of holes formed in the frame bracket 14 of the seat frame 12 is three, but there is no particular limitation on the number of holes. The number of holes formed in the frame bracket 14 may be four or more. The number of holes to be used for fixing the frame bracket 14 to the bracket 40 is not limited to two, but may be three or more.

In the embodiment described above, the side cover 71 is fixed to the bracket 40 by the third bolt 83, but the side cover 71 does not need to be fixed to the bracket 40. In such a case, the holes 66 and 67, through which the third bolt 83 is inserted, do not need to be formed in the bracket 40.

In the embodiment described above, the side cover 71 is formed integral with the foot board 20, but the side cover 71 and the foot board 20 may be separate from each other.

In the embodiment described above, the tandem footrest 50 is bar-shaped. However, there is no particular limitation on the shape and the structure of the tandem footrest 50. For example, any member can be used as the tandem footrest 50 as long as the member has a smaller area as seen from above than the area of the foot board 20 as seen from above, only a portion of a foot of the tandem rider can be placed on the member, and the member can be supported by the bracket 40.

### REFERENCE SIGNS LIST

1: Scooter (straddled vehicle), 11: Head pipe, 12: Seat frame, 12A: First portion, 12B: Second portion, 13: Pipe portion, 14: Frame bracket, 14a: First flat surface, 18: Under frame, 20: Foot board, 31: Main seat, 32: Tandem seat, 40: Bracket, 40a: Second flat surface, 50: Tandem footrest, 55: Support shaft, 61: First hole, 62: Second hole, 63: Third hole, 64: Fourth hole, 65: Fifth hole, 66: Sixth hole, 67: Seventh hole, 68: Eighth hole, 71: Side cover, 81: First bolt, 82: Second bolt, 83: Third bolt, 85: Gap

## Claims

1. A straddled vehicle comprising:
a head pipe (11);
a seat frame (12) placed outward of the head pipe (11) in a vehicle width direction and extending rearward;
a foot board (20) placed rearward and downward of the head pipe (11), the foot board (20) includes a left board portion (20L) located leftward of a vehicle center line (CL), a right board portion (20R) located rightward of the vehicle center line (CL), and a central board portion (20C) located between the left board portion (20L) and the right board portion (20R);
a main seat (31) placed rearward of the head pipe (11) and upward of the foot board (20);
a tandem seat (32) placed rearward of the main seat (31);
a tandem footrest (50) that is placed rearward of a front end (30f) of the main seat (31) and forward of a rear end (30r) of the tandem seat (32),
a bracket (40) detachably attached to the seat frame (12), wherein the tandem footrest (50) is supported by the bracket (40), and
at least first and second holes (61, 62) are formed in one of the bracket (40) and the seat frame (12), and at least third, fourth and fifth holes (63, 64, 65) are formed in the other one of the bracket (40) and the seat frame (12); wherein
the straddled vehicle comprises a first bolt (81) inserted through the first hole (61) and the third hole (63) and a second bolt (82) inserted through the second hole (62) and the fourth hole (64), or a first bolt (81) inserted through the first hole (61) and the fourth hole (64) and a second bolt (82) inserted through the second hole (62) and the fifth hole (65), **characterised in that**
the first and second holes (61, 62) are formed in the bracket (40); and the third, fourth and fifth holes (63, 64, 65) are formed in the seat frame (12), wherein the fourth hole (64) is located upward of the third hole (63), and the fifth hole (65) is located upward of the fourth hole (64); and
the fourth hole (64) is located rearward of the third hole (63), and the fifth hole (65) is located rearward of the fourth hole (64).

2. The straddled vehicle according to claim 1, wherein the straddled vehicle comprises a side cover (71) placed outward of the seat frame (12) in the vehicle width direction; and
the bracket (40) is placed between the seat frame (12) and the side cover (71).

3. The straddled vehicle according to claim 2, wherein a gap (85) is formed between the bracket (40) and the side cover (71) as the bracket (40) is seen from a rear side in a vehicle front-rear direction.

4. The straddled vehicle according to claim 2 or 3, wherein sixth and seventh holes (66, 67) are formed in the bracket (40);
an eighth hole (68) is formed in the side cover (71); and
the straddled vehicle comprises a third bolt (83) that is inserted through the sixth hole (66) and the eighth hole (68) when the first bolt (81) is inserted through the first hole (61) and the third hole (63) and the second bolt (82) is inserted through the second hole (62) and the fourth hole (64), or a third bolt (83) that is inserted through the seventh hole (67) and the eighth hole (68) when the first bolt (81) is inserted through the first hole (61) and the fourth hole (64) and the second bolt (82) is inserted through the second hole (62) and the fifth hole (65).

5. The straddled vehicle according to claim 4, wherein the side cover (71) and the foot board (20) are provided as a single member formed integrally together.

6. The straddled vehicle according to any one of claims 2 to 5, wherein the side cover (71) and the first and second bolts (81, 82) overlap with each other as the vehicle is seen from the side.

7. The straddled vehicle according to any one of claims 1 to 6, wherein the tandem footrest (50) is placed rearward of the foot board (20).

8. The straddled vehicle according to any one of claims 1 to 7, wherein the seat frame (12) includes a pipe portion (13) formed in a pipe shape, and a frame bracket (14) fixed to the pipe portion (13) and having a first flat surface (14a);
the bracket (40) has a second flat surface (40a) that faces the first flat surface (14a); an axial line (13c) of the pipe portion (13) is inclined from a vehicle front-rear direction; and
the first flat surface (14a) is formed non-parallel to an axial line (13c) of the pipe portion (13).

9. The straddled vehicle according to claim 8, wherein the first flat surface (14a) is parallel to the vehicle front-rear direction.

10. The straddled vehicle according to any one of claims 1 to 9, wherein the straddled vehicle comprises an under frame (18) that is placed downward of the foot board (20) and extends rearward;
the seat frame (12) includes a first portion (12A) that extends rearward and upward from the under frame (18) as the vehicle is seen from the side, and a second portion (12B) that extends rearward and upward from the first portion (12A) as the vehicle is seen from the side;
as the vehicle is seen from the side, an angle (θ1) formed between the first portion (12A) and a horizontal line (HL) is greater than an angle (θ2) formed between the second portion (12B) and the horizontal line (HL); and
the bracket (40) is attached to the first portion (12A).

11. The straddled vehicle according to any one of claims 1 to 10, further comprising a support shaft (55) that is supported by the bracket (40) and pivotally supporting the tandem footrest (50).

12. The straddled vehicle according to any one of claims 1 to 11, wherein the tandem footrest (50) is bar-shaped.

## Patentansprüche

1. Ein Spreiz-Sitz-Fahrzeug, das umfasst:
ein Kopf-Rohr (11);
einem Sitz-Rahmen (12), der außerhalb des Kopf-Rohrs (11) in Fahrzeug-Breiten-Richtung angeordnet ist und sich nach hinten erstreckt;
ein Fuß-Brett (20), das hinter und unter dem Kopf-Rohr (11) angeordnet ist,
das Fuß-Brett 20 beinhaltet einen linken Brett-Abschnitt (20L), der links von einer Fahrzeug-Mittel-Linie (CL) angeordnet ist, einen rechten Brett-Abschnitt (20R), der rechts von der Fahrzeug-Mittel-Linie (CL) angeordnet ist, und einen mittleren Brett-Abschnitt (20C), der zwischen dem linken Brett-Abschnitt (20L) und dem rechten Brett-Abschnitt (20R) angeordnet ist;
einem Haupt-Sitz (31), der hinter dem Kopf-Rohr (11) und oberhalb des Fuß-Bretts (20) angeordnet ist;
einem Tandem-Sitz (32), der hinter dem Haupt-Sitz (31) angeordnet ist;
eine Tandem-Fußstütze (50), die hinter einem vorderen Ende (30f) des Haupt-Sitzes (31) und vor einem hinteren Ende (30r) des Tandem-Sitzes (32) angeordnet ist,
eine Klammer (40), die lösbar am Sitz-Rahmen (12) befestigt ist, wobei die Tandem-Fußstütze (50) von der Klammer (40) getragen wird, und
mindestens ein erstes und ein zweites Loch (61, 62) in einem von der Klammer (40) und dem Sitz-Rahmen (12) ausgebildet sind und mindestens ein drittes, viertes und
fünftes Loch (63, 64, 65) in dem anderen von der Klammer (40) und dem Sitz-Rahmen (12) ausgebildet sind; wobei
das Spreiz-Sitz-Fahrzeug einen ersten Bolzen (81), der durch das erste Loch (61) und das dritte Loch (63) hindurchgeführt ist, und einen zweiten Bolzen (82), der durch das zweite Loch (62) und das vierte Loch (64) hindurchgeführt ist, oder einen ersten Bolzen (81), der durch das erste Loch (61) und das vierte Loch (64) hindurchgeführt ist, und einen zweiten Bolzen (82), der durch das zweite Loch (62) und das fünfte Loch (65) hindurchgeführt ist, aufweist, **dadurch gekennzeichnet, dass** das erste und das zweite Loch (61, 62) in der Klammer (40) ausgebildet sind; und das dritte, vierte und fünfte Loch (63, 64, 65) in dem Sitz-Rahmen (12) ausgebildet sind, wobei das vierte Loch (64) oberhalb des dritten Lochs (63) angeordnet ist, und
das fünfte Loch (65) oberhalb des vierten Lochs (64) angeordnet ist; und
das vierte Loch (64) hinter dem dritten Loch (63) angeordnet ist, und das fünfte Loch (65) hinter dem vierten Loch (64) angeordnet ist.

2. Das Spreiz-Sitz-Fahrzeug gemäß Anspruch 1, wobei das Spreiz-Sitz-Fahrzeug eine Seiten-Abdeckung (71) aufweist, die in Fahrzeug-Breiten-Richtung außerhalb des Sitz-Rahmens (12) angeordnet ist; und
die Klammer (40) zwischen dem Sitz-Rahmen (12) und der Seiten-Abdeckung (71) angebracht ist.

3. Das Spreiz-Sitz-Fahrzeug gemäß Anspruch 2, wobei ein Spalt (85) zwischen der Klammer (40) und der Seiten-Abdeckung (71) gebildet ist, wenn die Klammer (40) von einer Rückseite in einer Fahrzeug-Vorder-Rück-Richtung betrachtet ist.

4. Das Spreiz-Sitz-Fahrzeug gemäß Anspruch 2 oder 3, wobei in der Klammer (40) ein sechstes und siebtes Loch (66, 67) ausgebildet sind;
ein achtes Loch (68) in der Seiten-Abdeckung (71) ausgebildet ist; und
das Spreiz-Sitz-Fahrzeug einen dritten Bolzen (83) umfasst, der durch das sechste Loch (66) und das achte Loch (68) eingesetzt ist, wenn der erste Bolzen (81) durch das erste Loch (61) und das dritte Loch (63) eingesetzt ist und der zweite Bolzen (82) durch das zweite Loch (62) und das vierte Loch (64) eingesetzt ist, oder ein dritter Bolzen (83), der durch das siebte Loch (67) und das achte Loch (68) eingesetzt ist, wenn der erste Bolzen (81) durch das erste Loch (61) und das vierte Loch (64) eingesetzt ist und der zweite Bolzen (82) durch das zweite Loch (62) und das fünfte Loch (65) eingesetzt ist.

5. Das Spreiz-Sitz-Fahrzeug gemäß Anspruch 4, wobei die Seiten-Abdeckung (71) und das Fuß-Brett (20) als ein einziges Element vorgesehen sind, das einstückig miteinander ausgebildet ist.

6. Das Spreiz-Sitz-Fahrzeug gemäß irgendeinem der Ansprüche 2 bis 5, wobei sich die Seiten-Abdeckung (71) und der erste und zweite Bolzen (81, 82) überlappen, wenn das Fahrzeugs von der Seite betrachtet ist.

7. Das Spreiz-Sitz-Fahrzeug gemäß irgendeinem der Ansprüche 1 bis 6, wobei die Tandem-Fußraste (50) hinter dem Fuß-Brett (20) angeordnet ist.

8. Das Spreiz-Sitz-Fahrzeug gemäß irgendeinem der Ansprüche 1 bis 7, wobei der Sitz-Rahmen (12) einen rohrförmig ausgebildeten Rohr-Abschnitt (13) und eine Rahmen-Klammer (14), die an dem Rohr-Abschnitt (13) befestigt ist und eine erste ebene Fläche (14a) hat;
die Klammer (40) eine zweite ebene Fläche (40a) hat, die der ersten ebenen Fläche (14a) zugewandt ist;
eine Axial-Linie (13c) des Rohr-Abschnitts (13) von einer Fahrzeug-Vorder-Rück-Richtung aus geneigt ist; und
die erste ebene Fläche (14a) nicht parallel zu einer Axial-Linie (13c) des Rohr-Abschnitts (13) ausgebildet ist.

9. Das Spreiz-Sitz-Fahrzeug gemäß Anspruch 8, wobei die erste ebene Fläche (14a) parallel zur Fahrzeug-Vorder-Hinter-Richtung ist.

10. Das Spreiz-Sitz-Fahrzeug gemäß irgendeinem der Ansprüche 1 bis 9, wobei das Spreiz-Sitz-Fahrzeug einen Unter-Rahmen (18) aufweist, der unterhalb des Fuß-Bretts (20) angeordnet ist und sich nach hinten erstreckt;
der Sitz-Rahmen (12) einen ersten Abschnitt (12A), der sich von dem Unter-Rahmen (18) nach hinten und nach oben erstreckt, wenn das Fahrzeugs von der Seite betrachtet ist, und einen zweiten Abschnitt (12B) beinhaltet, der sich von dem ersten Abschnitt (12A) nach hinten und nach oben erstreckt, wenn das Fahrzeugs von der Seite betrachtet ist;
wenn das Fahrzeugs von der Seite betrachtet ist, ist ein Winkel (θ1), der zwischen dem ersten Abschnitt (12A) und einer Horizontal-Linie (HL) gebildet ist, größer ist als ein Winkel (θ2), der zwischen dem zweiten Abschnitt (12B) und der Horizontal-Linie (HL) gebildet ist; und
die Klammer (40) ist an dem ersten Abschnitt (12A) angebracht.

11. Das Spreiz-Sitz-Fahrzeug gemäß irgendeinem der Ansprüche 1 bis 10, das weiter eine Stütz-Welle (55) umfasst, die von der Klammer (40) getragen wird und die Tandem-Fußraste (50) schwenkbar abstützt.

12. Das Spreiz-Sitz-Fahrzeug gemäß irgendeinem der Ansprüche 1 bis 11, wobei die Tandem-Fußraste (50) stabförmig ist.

## Revendications

1. Véhicule à enfourcher comprenant :
un tube de tête (11) ;
un châssis de siège (12) placé à l'extérieur du tube de tête (11) en direction de la largeur du véhicule et s'étendant vers l'arrière ;
un marchepied (20) placé à l'arrière et au-dessous du tube de tête (11), dans lequel le marchepied (20) comprend une portion gauche de marchepied (20L) située à gauche de la ligne centrale du véhicule (CL), une portion droite de marchepied (20R) située à droite de la ligne centrale du véhicule (CL), et une portion centrale de marchepied (20C) située entre la portion gauche du marchepied (20L) et la portion droite du marchepied (20R) ;
un siège principal (31) placé à l'arrière du tube de tête (11) et au-dessus du marchepied (20) ;
un siège tandem (32) placé à l'arrière du siège principal (31) ;
un repose-pied tandem (50) qui est placé à l'arrière d'une extrémité avant (30f) du siège principal (31) et à l'avant d'une extrémité arrière (30r) du siège tandem (32),
un support (40) attaché de manière amovible au châssis de siège (12), dans lequel le repose-pied tandem (50) est supporté par le support (40), et
dans lequel au moins des premier et deuxième trous (61, 62) sont formés dans un élément parmi le support (40) et le châssis de siège (12), et au moins des troisième, quatrième et cinquième trous (63, 64, 65) sont formés dans l'autre élément parmi le support (40) et le châssis de siège (12) ; dans lequel
le véhicule à enfourcher comprend un premier boulon (81) inséré à travers le premier trou (61) et le troisième trou (63) et un deuxième boulon (82) inséré à travers le deuxième trou (62) et le quatrième trou (64), ou un premier boulon (81) inséré à travers le premier trou (61) et le quatrième trou (64) et un deuxième boulon (82) inséré à travers le deuxième trou (62) et le cinquième trou (65),
**caractérisé en ce que**
les premier et deuxième trous (61, 62) sont formés dans le support (40) ; et les troisième, quatrième et cinquième trous (63, 64, 65) sont formés dans le châssis de siège (12), dans lequel
le quatrième trou (64) est situé au-dessus du troisième trou (63), et le cinquième trou (65) est situé au-dessus du quatrième trou (64) ; et
le quatrième trou (64) est situé à l'arrière du troisième trou (63), et le cinquième trou (65) est situé à l'arrière du quatrième trou (64).

2. Véhicule à enfourcher selon la revendication 1, dans lequel
le véhicule à enfourcher comprend un carénage latéral (71) placé à l'extérieur du châssis de siège (12) en direction de la largeur du véhicule ; et
le support (40) est placé entre le châssis de siège (12) et le carénage latéral (71).

3. Véhicule à enfourcher selon la revendication 2, dans lequel un intervalle (85) est formé entre le support (40) et le carénage latéral (71) lorsque le support (40) est vu depuis le côté arrière en direction avant-arrière du véhicule.

4. Véhicule à enfourcher selon la revendication 2 ou 3, dans lequel
des sixième et septième trous (66, 67) sont formés dans le support (40) ;
un huitième trou (68) est formé dans le carénage latéral (71) ; et
le véhicule à enfourcher comprend un troisième boulon (83) qui est inséré à travers le sixième trou (66) et le huitième trou (68) quand le premier boulon (81) est inséré à travers le premier trou (61) et le troisième trou (63) et le deuxième boulon (82) est inséré à travers le deuxième trou (62) et le quatrième trou (64), ou un troisième boulon (83) qui est inséré à travers le septième trou (67) et le huitième trou (68) quand le premier boulon (81) est inséré à travers le premier trou (61) et le quatrième trou (64) et le deuxième boulon (82) est inséré à travers le deuxième trou (62) et le cinquième trou (65).

5. Véhicule à enfourcher selon la revendication 4, dans lequel le carénage latéral (71) et le marchepied (20) sont pourvus comme un élément unique et conformés de manière intégrée.

6. Véhicule à enfourcher selon l'une quelconque des revendications 2 à 5, dans lequel le carénage latéral (71) et les premier et deuxième boulons (81, 82) se chevauchent lorsque le véhicule est vu de côté.

7. Véhicule à enfourcher selon l'une quelconque des revendications 1 à 6, dans lequel le repose-pied tandem (50) est placé à l'arrière du marchepied (20).

8. Véhicule à enfourcher selon l'une quelconque des revendications 1 à 7, dans lequel
le châssis de siège (12) comprend une portion de tuyau (13) conformée comme un tuyau, et un support de châssis (14) fixé sur la portion de tuyau (13) et ayant une première surface plane (14a) ;
le support (40) comporte une deuxième surface plane (40a) qui fait face à la première surface plane (14a) ;
une ligne axiale (13c) de la portion de tuyau (13) est inclinée par rapport à la direction avant-arrière du véhicule ; et
la première surface plane (14a) est formée de manière non parallèle à une ligne axiale (13c) de la portion de tuyau (13).

9. Véhicule à enfourcher selon la revendication 8, dans lequel la première surface plane (14a) est parallèle à la direction avant-arrière du véhicule.

10. Véhicule à enfourcher selon l'une quelconque des revendications 1 à 9, dans lequel
le véhicule à enfourcher comprend un sous-châssis (18) qui est placé au-dessous du marchepied (20) et s'étend vers l'arrière ;
le châssis de siège (12) comprend une première portion (12A) qui s'étend vers l'arrière et vers le haut depuis le sous-châssis (18) lorsque le véhicule est vu de côté, et une deuxième portion (12B) qui s'étend vers l'arrière et vers le haut depuis la première portion (12A) lorsque le véhicule est vu de côté ;
lorsque le véhicule est vu de côté, l'angle (θ1) formé entre la première portion (12A) et une ligne horizontale (HL) est supérieur à l'angle (θ2) formé entre la deuxième portion (12B) et la ligne horizontale (HL) ; et
le support (40) est attaché à la première portion (12A).

11. Véhicule à enfourcher selon l'une quelconque des revendications 1 à 10, comprenant en outre un axe de support (55) qui est supporté par le support (40) et qui supporte le repose-pied tandem (50) de manière pivotante.

12. Véhicule à enfourcher selon l'une quelconque des revendications 1 à 11, dans lequel le repose-pied tandem (50) présente une forme de barre.
